(19) Europäisches Patentamt

European Patent Office

Office européen des brevets

(11) EP 1 681 636 A1

(12) EUROPEAN PATENT APPLICATION

(43) Date of publication:
19.07.2006 Bulletin 2006/29

(51) Int Cl.:
*G06F 17/30* (2006.01)

(21) Application number: 05000826.7

(22) Date of filing: 17.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: Bridgewell Inc.
Jhongshan District, Taipei City 104 (TW)

(72) Inventor: Peilin, Chou
Jhongshan District
Taipei City 104 (TW)

(74) Representative: Winter, Brandl, Fürniss, Hübner
Röss, Kaiser,
Polte Partnerschaft Patent- und
Rechtsanwaltskanzlei
Alois-Steinecker-Strasse 22
85354 Freising (DE)

(54) **Portable database search agent processing system**

(57) A portable database search agent processing system, comprising:

a search agent memory to store a plurality of database search agents, wherein each database search agent is recorded with a group of search parameters, each search parameter comprising at least one search index and its corresponding weight value;
a database search engine to search in a database for data files complying with search conditions including said search parameters of a database search agent in said search agent memory;
a data file memory to store data files searched by said database search engine;
a training module to display data files searched by said database search engine and to accept evaluations to respective searched data files provided by user; wherein said evaluation includes judgment on whether a searched data file is a desired data file; said training module being able to generate a modifying database search agent according to content of any said searched data file and user's evaluation thereto, wherein said modifying database search agent comprises a group of search parameters, each search parameter comprising at least one search index and its weight value;
a modification module to modify content of database search agent in said database search agent memory according to content of said modifying database search agent; and
a user interface to allow user to operate at least said database search agent memory, said search engine, said training module and said modification module.

Fig. 1

**Description**

## FIELD OF THE INVENTION

The present invention relates to a portable database search agent processing system, especially to a processing system that incubates and trains portable database search agents and uses the database search agent to search information in databases.

## BACKGROUND OF THE INVENTION

Along with the wide spread of computer and the internet, searching useful information in all kinds of large scaled database systems through the internet has become the routine work of everybody's daily work and daily life. Nowadays the computer system has combined all useful information into large scaled databases and the internet further joints all the large scaled databases into a world wide database. Although this rapidly growing database has provided large quantity of documents, information etc., how to search useful information in this world wide large scaled database, thus becomes an important technical problem.

With the development of the internet, there are a variety of search engines that search documents in the internet being brought to the world. Typically such search engines appear in the form of website. Users are allowed to access the search websites and key in so called "keywords", then the search engine will automatically search in all connected databases for documents or other contents that comply with the search conditions. After the search, content of the resulted documents will be displayed in the screen of the user computer.

In the above-described conventional art, there are two major methods to search desired information. The first one is the so-called "keyword" search, wherein the keywords input by the user are used to search in all databases documents that contain the keywords. The second approach is to have the user to input terms (words) that should exist or should not exist in the desired documents and to search in the databases documents that comply with such search conditions. In the latter approach, it is possible to attach attributive data to the input terms so that the operation unit of the database search system uses operands such as "AND" and "OR" to calculate relativity values between articles in the database and the search conditions based on the existence or non-existence of the input terms in the documents. Such relativity value is called "Boulene value". The search result is always a list of documents with Boulene values greater than a threshold, in a sequence following their respective Boulene values.

As searching information such as documents in the large scaled databases such as the internet has become an important task, for many companies, government agencies and individual searching correctly in databases to obtain useful information has been treated a working skill. From the viewpoint of employer or the company, skillful searching ability relies on, in addition to talent, continuous practices and accumulation of experiences. However, such skills can not be inherited by or distributed to other employees. When an employee is removed from his/her position, the successor needs to spend almost the same long time to acquire same or similar information search capability and experiences.

## OBJECTIVES OF THE INVENTION

The objective of this invention is to provide a portable database search agent that searches information in large scaled databases such as the internet on behalf of the user.

Another objective of this invention is to provide a portable database search agent that is recorded with attributes of search conditions of particular users and automatically searches information in large scales databases such as the internet to obtain search results as though searched by the user.

Another objective of this invention is to provide a portable database search agent wherein behavior of users in searching information is recorded such that the search engine may represent the users to search information in large scaled databases and that the search agent may be utilized by another.

Another objective of this invention is to provide a portable database search agent wherein attributes of search conditions may be revised from time to time to comply with the need of the user.

Another objective of this invention is to provide a portable database search agent processing system with which content of said portable database search agent may be revised according to purposes of search.

## SUMMARY OF THE INVENTION

This invention discloses a portable database search agent wherein a group of information search parameters are recorded so that t database search system may search useful information in a large quantity of databases using said parameters. The parameters of the portable database search agent may be modified by the invented portable database search agent processing system according to the instruction of users, after it is installed in the portable database search system. The user then can use the modified database search agent to search useful information in the large scaled database, such that result of information may comply closely to the purposes of search of the user. The modification of the database search agent by the processing system comprises:

Obtaining a first portable database search agent and the group of information search parameters, each parameter comprising at least one search index and its corresponding weight value;

Searching according to said group of information search parameters in particular database to obtain a plurality of data files complying with search conditions;

Selecting particular number of data files from said plurality of data files and displaying said selected data files to user;

Accepting user's assessment of said displayed data files; which assessment includes assessment on whether particular data files comply with objectives of search;

Generating a second database search agent describing content of said assessed data files according to said assessment of user and content of said assessed data files;

Combining search parameters of said first database search agent and said second database search agent to generate third database search agent wherein weight values of identical search indices are cumulated;

Searching in same or different databases according to search parameters of said third search agent to obtain data files complying with search conditions;

Selecting particular number of data files in said obtained data files and displaying said selected data files to user;

Accepting user's assessment of said displayed data files; which assessment includes assessment on whether particular data files comply with objectives of search;

Calculating similarity value of said search result and said objectives of search according to said user's assessment;

If said similarity value is not greater than a threshold, modifying said weight values of search parameters of said second database search agent and combining said modified second database search agent and said first database search agent to generate fourth database search agent;

Searching in same or different databases using said fourth database search agent and repeating said assessment and similarity value calculation steps until said similarity value is greater than said threshold; and

If said similarity value is greater than said threshold, outputting said modified second database search agent.

These and other objectives and advantages of this invention may be clearly understood from the detailed description by referring to the following drawings.

## BRIEF DESCRIPTION OF THE DRAWINGS

Fig. 1 shows the systematic diagram of the portable database search agent processing system of this invention.

Fig. 2 shows the flowchart of the method for generating a database search agent from a text file according to this invention.

Fig. 3 is flowchart for modification of portable database search agent of this invention.

## DETAILED DESCRIPTION OF THE INVENTION

This invention discloses a portable database search agent recorded with a group of database search parameters to provide database search system to search desired data files in a quantity of databases. The portable database search agent may be installed in the portable database search agent processing system, whereby said processing system may modify database search parameters recorded in said search agent according to input of user, such that the modified search agent may conduct searches of data files in compliance with objectives of search of said user.

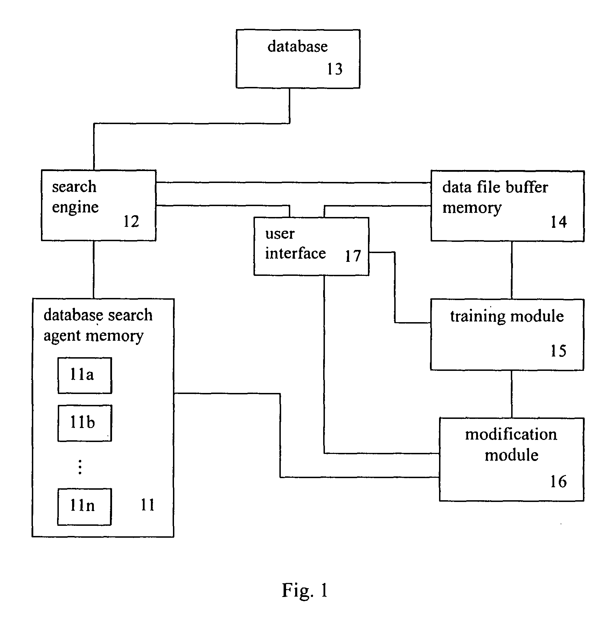

Fig. 1 shows the systematic diagram of the portable database search agent processing system of this invention. As shown in this figure, the portable database search agent processing system comprises:

A search agent memory 11 to store a plurality of database search agents 11a-11n, wherein each database search agent is recorded with a group of search parameter each comprising at least one search index and its corresponding weight value; which search parameter being expressed by:

$$Si=(xi1, wi1), (xi2, wi2), \ldots (xin, win)$$

wherein Si represents the ith search agent, x is its index and w is weight value;

A search engine 12 to allocate data files in database that comply with search conditions including search parameters contained in database search agents stored in said database search agent memory 11;

A data file buffer memory 14 to store data files searched by said database search engine 12;

A training module 15 to display content of data files being searched to user and to accept user's assessments on respective searched data files; wherein said assessment includes assessment on whether a searched data file complies with objectives of search of said user; said training module 15 being able to generate a modification database search agent according to content of assessed data files and assessment of corresponding data files by user wherein said database search agent comprises a group of search parameters, each parameter comprising a search index and its weight value;

A modification module 16 to modify database search agent stored in said database search agent memory 11; and

A user interface 17 to allow user to operate at least said database search agent memory 11, said search engine 12, said training module 15 and said modification module 16.

Using the processing system as described above, user may install a foreign database search agent into the database search agent memory 11 and use the installed database search agent as bases to search data files in the database 13 through the search engine 12. With the results of such search the installed database search agent may be modified to further comply with the objectives of search of the user. In the present invention, the database search agent may be expressed by:

$$Si=(xi1, wi1), (xi2, wi2), \ldots (xin, win)$$

wherein Si represents the ith search agent, x is its index which may be a keyword, if data files to be searched are text files, a feature, if the data files to be searched are video files, or a waveform or other features if the data files to be searched are audio files; w represents its weight value.

Database search agent applicable in the present invention may be generated according to any known technology. For example, US patent application No. 10/688,295 discloses a technology to manually convert a search keyword into a string of search indices.

US patent application No. 10/794,698 discloses a technology of automatically generating a string of search parameters by analyzing content of one or more data files.

In order to exemplify the present invention, the invention of US patent application No. 10/794,698 will be taken as reference and its technology will be described hereinafter. In the following description, generating a database search agent describing features of an article (a text file) after having analyzing content of said article will be taken as an example.

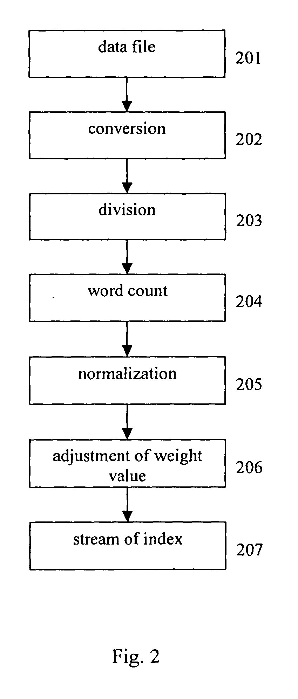

Fig. 2 shows the flowchart of the method for generating a database search agent from a text file. As shown in this figure, at 201 a data file is obtained, which data file is a text file. At 202 the text file is converted into text information or text data format to be further processed; at 203 parsing of the text file is conducted so that the text file is converted into a continuous string of "words". Then at 204 times of existence (frequency) of each "word" is calculated to obtain a collection of indices comprising a term (word) and its frequency value. The file may be called an "index information string". Then at 205 normalization of the index information file is conducted. Normalization of the index information file may reduce the influence of the length of the text file to the indices and their weight values. In the practical applicat9ons, a standard length of the text file may bet set. All articles to be processed are compared with the set values and the weight values of each article are adjusted by the ratio of its length and the standard length.

At 206 terms with very high frequency and are not meaningful are adjusted at 206. During the adjustment, weight values of terms or words, characters that appear in the majority of articles are decreased.

When conducting the adjustment, the frequency values obtained in the previous step are timed by an adjust value so that when the number of articles wherein a term exists is greater, the weight value of the term is decreased to even 0.

After the above process, all weight values are obtain at step 207, which are separately recorded to form a data search agent.

Besides the above said method, other methods to establish database search agent with similar structure may be applied in this invention.

In some embodiments of this invention, weight values of the search parameters may be negative values. The search agent 11 is able to obtain data files A in the database 13 and compare content of the obtained data files with indices contained in the database search agent so that indices existing in the database may be allocated and *Similarity* value of respectively obtained data files with the indices of the search agent may be calculated as follows:

$$\text{Similarity} = \sum x_j w_j, \forall x_j \in (A)$$

wherein A represents data files being searched, (A) represents a cell of data files A; $x_j$ represents indices contained in the database search agent and $w_j$ is its weight value.

The search engine 12 compares the obtained Similarity value with a threshold value and picks up data files with Similarity values greater than the threshold as result of search. The result is stored in the data file buffer memory 14 for further use.

Purposes of search as described above are to verify whether the search results of the external database search agent comply with the objectives of search of the user. In the present invention, the external database search agent is a search agent as established and trained by another. Such search agent is able to search desired data files from the database for that other person but it may not be able to search desired data files for persons other than that other person.

In order to modify the external search agent so that search results of the modified external search agent may comply with the need of a new user, the training module 15 displays details of the above search results in the user interface 17, allowing the user to evaluate. The user may read the content of the search results and give evaluations. The evaluation in general includes judgment on whether a searched data file is a desired data file, according to the personal opinion of the user. In practical applications, it is possible to provide a button in the screen to represent "yes" and "no", so that the user may click on either of them. Of course, it is possible to use other methods to allow users to input their evaluation to each searched data file into the training module 15.

Data files having been evaluated are labeled. When a certain number of data files are evaluated by the user, or when the user stops to input evaluation information, the training module 15 starts to analyze the evaluated data files to obtain a database search agent for modification purposes, called "modifying search agent". The modifying search agent may be expressed by:

$$S_t = (x_{t1}, w_{t1}), (x_{t2}, w_{t2}), ... (x_{tm}, w_{tm})$$

wherein x and w have the same definitions.

It shall be noted that for data files that are evaluated as "no", indices given to them may be connected to negative weight values. Taking into considerations the content of all evaluated data files, it is possible to generate a modifying search agent with negative weight values. Method for generating such a modifying search agent may be that disclosed in the above-said US patent application No. 10/794,698. Detailed description of the method is thus omitted.

In the practical operation of this invention, the modifying database search agent St may include a quantity of search indices that were contained in the external database search agent. This is because an external database search agent is the result of long time use and training of other persons, containing the knowledge, experiences and wisdom of other persons.

The modification module 16 then combines the modifying database search agent and the external database search agent, to obtain a database search agent for test purposes, called database search agent tester Ss. The database search agent tester Ss may be expressed as:

$$S_s = \{(x_{sk}, w_{sk})$$

wherein

$$x_{sk} = x_i, w_{sk} = w_{ik} + w_{tk}, \forall x_i = x_t$$

$$x_{sk} = x_i, w_{sk} = w_i, \forall x_i \notin \{x_t\}$$

$$x_{sk} = x_t, w_{sk} = w_t, \forall x_i \in \notin \{x_i\}$$

and

$$k \in N.$$

The database search agent tester as obtained from the above modification is then used to conduct a search in the database. Method for such search is the same or similar as above. It is highly possible that the database search agent tester would be able to search desired data files for the user, since it has been trained in the manner as above. However, verification of such facts is necessary. At this step, contents of the search result are again presented in the user interface 17 for the user to evaluate. Again, the user is requested to input evaluations from the user interface. In this stage, it is preferable to select a certain number, such as top 5, of the data files with the highest Similarity values for evaluation. Ratio of "yes" data files in the selected data files is compared with a standard ratio. If the ratio is equal to or greater than the standard ratio, the database search agent tester is considered a qualified database search agent; Otherwise, the database search agent tester is modified repeatedly until its "yes" ratio reaches the standard ratio.

In modifying the database search agent tester, the modification module 16, for example, times all the respective weight values of the modifying search agent with the "yes" ratio and combines the modifying search agent with the external database search agent. It is also possible to modify the indices or weight values of the modifying database search agent with any other method. In addition, it is also possible to modify the external database search agent and the modifying search agent respectively and to combine them into one database search agent.

The database search agent tester may be modified, evaluated and verified, until its "yes" ratio reaches the standard ratio. A database search agent that is able to search desired data files for the user may thus be generated.

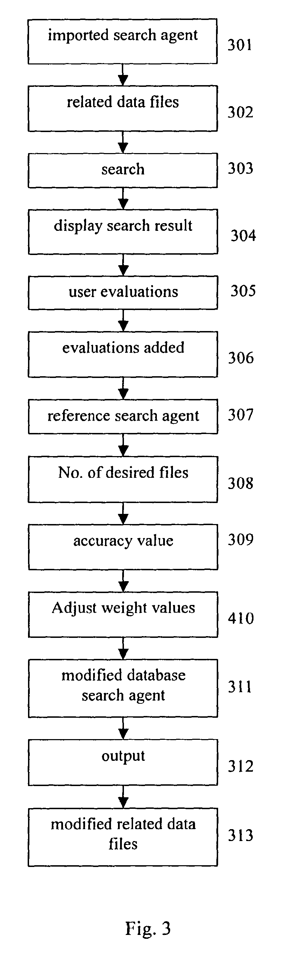

As described above, the portable database search agent processing system modifies the external database search agent in a way as shown in Fig. 3, which is flowchart for modification of portable database search agent of this invention, and includes the following steps:

At 301 an external database search agent comprising a group of database search parameters is obtained. The search parameter comprises at least one search condition and its corresponding weight value. At 302 the group of database search parameters is used to search in the database 13, to obtain several data files complying with or close to the search parameters. At 303 a certain number of data files are selected from the obtained data files and content of the selected data files is displayed in the user interface 17 for evaluation. At 304 evaluation from the user is accepted, which evaluation comprises judgment on whether a data file is a desired data file. At 305 a database search agent for modification purpose (called modifying search agent) that is descriptive to the evaluated data files is established according to the evaluation of the user and the content of the evaluated data files. At 306 the search parameters of the external database search agent and the modifying search agent are combined to obtain a database search agent tester, wherein weight values of the same search condition are summed. At 307 the database search agent tester is used to search in the database 13 to obtain a plurality of data files that comply with or close to the search parameters of the database search agent tester. At 308 a certain number of data files is selected from the searched data files and displayed in the user interface 17 to be evaluated. At 309 evaluations from the user is accepted which evaluations comprise judgments on whether particular data files are desired data files. At 310 correctness of the database search agent tester is calculated according to the evaluations of the user. At 311 the correctness is compared with a standard correctness value. If the correctness is lower than the standard correctness value, weight values of the modifying search agent are modified according to the evaluation of the user at 312 and at 313 the modified modifying search agent is combined with the external to obtain a modified database search agent tester. At 314 the modified database search agent is used to search in the database 13 and steps 308 to 310 are repeated until the correctness of the database search agent tester is equal to or greater than the standard correctness value. If in step 311 the correctness is found to be equal to or greater than the standard correctness value, the modified database search agent tester is output as result of modification.

In the present invention, the user interface may also provide a function to modify the currently used database search agent from time to time after the user initiates such function.

As described above, the portable database search agent processing system is able to modify an external database search agent such that the modified database search agent may search desired data files for a new user. As a result, the database search agent can function as an independent search tool and may be ported to different computer systems. A database search agent that is matured due to long term use of an experienced user may be used by a new user. The experiences of the original user may be inherited by another user to search for desired data files for the other user. In addition, the database search agent may be modified from time to time. This invention makes the database search agent portable from one user to another.

As the present invention has been shown and described with reference to preferred embodiments thereof, those skilled in the art will recognize that the above and other changes may be made therein without departing from the spirit and scope of the invention.

**Claims**

1.   A portable database search agent processing system, comprising:

> a search agent memory to store a plurality of database search agents, wherein each database search agent is recorded with a group of search parameters, each search parameter comprising at least one search index and its corresponding weight value;
> a database search engine to search in a database for data files complying with search conditions including said search parameters of a database search agent in said search agent memory;
> a data file memory to store data files searched by said database search engine;
> a training module to display data files searched by said database search engine and to accept evaluations to respective searched data files provided by user; wherein said evaluation includes judgment on whether a searched data file is a desired data file;
> said training module being able to generate a modifying database search agent according to content of any said searched data file and user's evaluation thereto, wherein said modifying database search agent comprises a group of search parameters, each search parameter comprising at least one search index and its weight value;
> a modification module to modify content of database search agent in said database search agent memory according to content of said modifying database search agent; and
> a user interface to allow user to operate at least said database search agent memory,
> said search engine, said training module and said modification module.

2.   The portable database search agent processing system according to claim 1, wherein said database search agent is as:

$$S_i=(x_{i1}, w_{i1}), (x_{i2}, w_{i2}), \ldots, (x_{in}, w_{in})$$

wherein $S_i$ represents the ith search agent in said database search agent memory, x is its search index and w is weight of said search index.

3.   The portable database search agent processing system according to claim 2, wherein data files to be searched are text files and x represents a keyword.

4.   The portable database search agent processing system according to claim 1, wherein said search engine is able to obtain data files from said database, to compare content of said obtained data files with search indices of said database search agent, to identify information corresponding to said search indices in said data files and to calculate Similarity value as follows:

$$\text{Similarity} = \sum x_j w_j, \forall x_j \in (A)$$

wherein A represents data files being searched, (A) represents a cell of data files A; $x_j$ represents indices contained in said database search agent and $w_j$ is its weight value; and
said search engine is able to compare said Similarity value with a threshold value and to select data files with Similarity values equal to or greater than said threshold value as searched data files.

5. The portable database search agent processing system according to claim 1, wherein data files as evaluated as "not desired" are used to generate search indices with negative weight values.

6. The portable database search agent processing system according to claim 1, wherein said modification module combines said modifying database search agent $S_t = \{(x_{tk}, w_{tk})\}$ and said database search agent $S_i = \{(x_{ik}, w_{ik})\}$ to obtain a database search agent tester $S_s = \{(x_{sk}, w_{sk})\}$, as follows:

$$x_{sk} = x_i, w_{sk} = w_{ik} + w_{tk}, \forall x_i = x_t$$

$$x_{sk} = x_i, w_{sk} = w_i, \forall x_i \notin \{x_t\}$$

$$x_{sk} = x_t, w_{sk} = w_t, \forall x_i \in \notin \{x_i\}$$

and

$$k \in N;$$

wherein $x_k$ is an index and $w_k$ is its weight.

7. The portable database search agent processing system according to claim 6, wherein said modification module combines said modifying search agent and said database search agent after having adjusted weight values of said modifying search agent with an adjustment factor.

8. The portable database search agent processing system according to claim 6, wherein said modification module combines said modifying search agent and said database search agent after having adjusted weight values of said modifying search agent and said database search agent.

9. Method for modification of a portable database search agent, comprising the following steps:

obtaining a first database search agent recorded with a group of search parameters, each search parameter comprising at least one search index and its corresponding weight value;
searching in particular database using search conditions including said group of search parameters as to obtain data files complying with said search conditions; selecting a number of data files in said searched data files to be evaluated;
accepting evaluations from user, which evaluation including judgment on whether a data file is desirable;
establishing second database search agent descriptive of content of said evaluated data files according to said user evaluations and content of said evaluated data files;
combining said first database search agent and said second database search agent to obtain a third database search agent, wherein weight values of same search indices are summed;

searching in same or different database using said third database search agent to obtain a plurality of data files;

selecting particular number of data files from said obtained data files for evaluation;

accepting evaluations from user which evaluations include judgment on whether particular data files are desirable;

calculating ratio of "desired" data files in said selected data files as correctness;

if said correctness is less than a threshold value, modifying weight values of said second database search agent according to said user evaluations and combining said modified second database search agent with said first database search agent to obtain a fourth database search agent;

search in dame or different database using said fourth database search agent and

repeating said evaluation and correctness calculation steps until said correctness is equal to or greater than said threshold value; and

if said correctness is equal to or greater than said threshold value, outputting said modified database search agent.

**10.** The method according to claim 9, wherein said database search agent is as:

$$S_i = (x_{i1}, w_{i1}), (x_{i2}, w_{i2}), \ldots, (x_{in}, w_{in})$$

wherein $S_i$ represents the ith search agent in said database search agent memory, x is its search index and w is weight of said search index.

**11.** The method according to claim 9, wherein data files to be searched are text files and x represents a keyword.

**12.** The method according to claim 9, wherein search of data files comprises selecting data files with Similarity values greater than a threshold value and wherein said Similarity value is calculated as follows:

$$\mathrm{Similarity} = \sum x_j w_j, \forall x_j \in (A)$$

wherein A represents data files being searched, (A) represents a cell of data files A; $x_j$ represents indices contained in said database search agent and $w_j$ is its weight value.

**13.** The method according to claim 9, wherein data files as evaluated as "not desired" are used to generate search indices with negative weight values.

**14.** The method according to claim 9, wherein combination of a database search agent $S_t = \{(x_{tk}, w_{tk})\}$ and another database search agent $S_i = \{(x_{ik}, w_{ik})\}$ to obtain a further other database search agent $S_s = \{(x_{sk}, w_{sk})\}$ comprising modifying their indices and weight values as follows:

$$x_{sk} = x_i, w_{sk} = w_{ik} + w_{ik}, \forall x_i = x_t$$

$$x_{sk} = x_i, w_{sk} = w_i, \forall x_i \notin \{x_t\}$$

$$x_{sk} = x_t, w_{sk} = w_t, \forall x_i \in \notin \{x_i\}$$

and

$$k \in N;$$

wherein $x_k$ is an index and $w_k$ is its weight.

15. The method according to claim 14, wherein said one search agent and said another database search agent are combined after said another database search agent is adjusted by timing its weight values with an adjustment factor.

16. The method according to claim 14, wherein said one search agent and said another database search agent are combined after both database search agents are adjusted by timing their respective weight values with respective adjustment factors.

Fig. 1

data file | 201

conversion | 202

division | 203

word count | 204

normalization | 205

adjustment of weight value | 206

stream of index | 207

Fig. 2

| | |
|---|---|
| imported search agent | 301 |
| related data files | 302 |
| search | 303 |
| display search result | 304 |
| user evaluations | 305 |
| evaluations added | 306 |
| reference search agent | 307 |
| No. of desired files | 308 |
| accuracy value | 309 |
| Adjust weight values | 410 |
| modified database search agent | 311 |
| output | 312 |
| modified related data files | 313 |

Fig. 3

# EP 1 681 636 A1

**European Patent Office**

## EUROPEAN SEARCH REPORT

**Application Number**

EP 05 00 0826

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SHETH B D: "A Learning Approach to Personalized Information Filtering" MASSACHUSETTS INSTITUTE OF TECHNOLOGY, February 1994 (1994-02), XP002178871 * page 19 - page 38 * | 1-16 | G06F17/30 |
| X | FRAGOUDIS D ET AL: "Retriever: a self-training agent for intelligent information discovery" INFORMATION INTELLIGENCE AND SYSTEMS, 1999. PROCEEDINGS. 1999 INTERNATIONAL CONFERENCE ON BETHESDA, MD, USA 31 OCT.-3 NOV. 1999, LOS ALAMITOS, CA, USA,IEEE COMPUT. SOC, US, 31 October 1999 (1999-10-31), pages 594-599, XP010362243 ISBN: 0-7695-0446-9 * page 594, right-hand column, last paragraph - page 598, left-hand column, paragraph 1 * | 1-16 | |
| X | US 2003/220908 A1 (CHOU PEILIN) 27 November 2003 (2003-11-27) * paragraph [0030] - paragraph [0068] * * paragraph [0078] - paragraph [0090] * | 1-16 | **TECHNICAL FIELDS SEARCHED (Int.Cl.7)** <br><br> G06F |
| X | US 6 304 864 B1 (LIDDY ELIZABETH D ET AL) 16 October 2001 (2001-10-16) * columns 3,4 * | 1-16 | |
| A | WO 03/043334 A (KONINKLIJKE PHILIPS ELECTRONICS N.V; MEULEMAN, PETRUS, G) 22 May 2003 (2003-05-22) * page 12, line 13 - page 20, line 3 * | 1-16 | |

The present search report has been drawn up for all claims

| Place of search | Date of completion of the search | Examiner |
|---|---|---|
| The Hague | 6 June 2005 | Díaz de Lezana, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 00 0826

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2005

| Patent document cited in search report | | Publication date | Patent family member(s) | | Publication date |
|---|---|---|---|---|---|
| US 2003220908 | A1 | 27-11-2003 | NONE | | |
| US 6304864 | B1 | 16-10-2001 | AU | 4360300 A | 02-11-2000 |
| | | | WO | 0063837 A1 | 26-10-2000 |
| WO 03043334 | A | 22-05-2003 | EP | 1452029 A2 | 01-09-2004 |
| | | | WO | 03043334 A2 | 22-05-2003 |
| | | | JP | 2005509965 T | 14-04-2005 |
| | | | US | 2005066350 A1 | 24-03-2005 |

EPO FORM P0459

For more details about this annex : see Official Journal of the European Patent Office, No. 12/82